# EUROPÄISCHE PATENTSCHRIFT

(11) **EP 1 756 450 B1**
(45) Veröffentlichungstag und Bekanntmachung des Hinweises auf die Patenterteilung: **16.07.2014**
(21) Anmeldenummer: 05749351.2
(22) Anmeldetag: 07.06.2005
(51) Int. Cl.: F16H 61/02

(54) **VERFAHREN ZUR STEUERUNG EINES AUTOMATIKGETRIEBES**
METHOD FOR CONTROLLING AN AUTOMATIC TRANSMISSION
PROCEDE POUR COMMANDER UNE BOITE DE VITESSES AUTOMATIQUE

(30) Priorität: 14.06.2004 DE 102004028705
(43) Veröffentlichungstag der Anmeldung: 28.02.2007
(73) Patentinhaber: Continental Automotive GmbH, 30165 Hannover (DE)
(72) Erfinder: DEIML, Mathias, 93093 Donaustauf (DE); NELLES, Oliver, 57080 Siegen (DE); SASSLER, Walter, 93057 Regensburg (DE)
(86) Internationale Anmeldenummer: PCT/EP2005/052592
(87) Internationale Veröffentlichungsnummer: WO 2005/121605

(56) Entgegenhaltungen:
- WO-A-2004/081417
- DE-A1- 3 201 440
- US-A1- 2002 046 894

## Beschreibung

### Verfahren zur Steuerung eines Automatikgetriebes

Die Erfindung betrifft ein Verfahren zur Steuerung eines Automatikgetriebes, wie bekannt aus DE 32 01 440 A, gemäß dem Oberbegriff des Patentanspruchs 1.

In den letzten Jahren ist es bekannt geworden, Automatikgetriebe für Kraftfahrzeuge derart auszubilden, dass diese alternativ zu der an sich normalen automatischen Betriebsweise von dem Fahrzeugführer hinsichtlich einer Übersetzungsänderung auch manuell geschaltet werden können.

Bei solchen Getrieben ist es üblich, dass dann, wenn der Betätigungshebel der Betätigungseinrichtung des Getriebes in der sogenannten Automatikgasse eingelegt ist, das Getriebe in einem an sich bekannten Automatikmodus betrieben wird. In diesem Automatikmodus wählt das Getriebesteuerungsgerät autonom das für die jeweilige Fahrsituation optimale Getriebeübersetzungsverhältnis aus und stellt mittels diesbezüglicher Steuerbefehle für getriebeseitige Aktuatoren das gewählte Getriebeübersetzungsverhältnis ein.

Um einen Betriebsartwechsel von der autonomen zur manuell befehligten Übersetzungsänderungssteuerung des Automatikgetriebes realisieren zu können, sind für moderne gattungsgemäße Automatikgetriebe bzw. Kraftfahrzeuge zwei unterschiedliche technische Möglichkeiten bekannt.

Gemäß der ersten Variante erfolgt ein Wechsel von dem Automatikmodus in den Manuellmodus durch ein Verschwenken des beispielsweise an der Fahrzeugmittelkonsole angeordneten Wählhebels einer diesbezüglichen Getriebebetätigungseinrichtung aus einer Automatikgasse in eine Manuellgasse. In dieser Manuellgasse kann dann durch Auslenken des Wählhebels in eine Richtung ein sequentielles Hochschalten an das Getriebesteuerungsgerät befehligt werden, während ein Auslenken des wählhebels in die entgegengesetzte Richtung einen Rückschaltvorgang auslöst.

Gemäß der zweiten Variante erfolgt der genannte Betriebsartwechsel durch das Betätigen von üblicherweise am Lenkrad angeordneten Tastern, Knöpfen, Hebeln o.ä., deren beiden Betätigungsrichtungen meistens mit einem "+" und einem "-" für eine manuell zu befehligende Getriebehochschaltung bzw. Getrieberückschaltung gekennzeichnet sind.

Der prinzipielle Unterschied zwischen der ersten und der zweiten Variante besteht darin, dass der Betriebsartwechsel gemäß der ersten Variante durchweg dauerhaft angelegt ist, so dass keine automatische Rückkehr in den Automatikmodus des Getriebes erfolgt. Dies liegt vor allem daran, dass der Fahrer eines solchen Fahrzeuges durch das mechanische Einrasten des Wählhebels in die manuelle Gasse normalerweise davon ausgeht, dass dieser Zustand solange beibehalten wird, bis er selbst den Wählhebel manuell in die Automatikgasse zurücklegt.

Eine autonome Rückkehr in den Automatikmodus bei einer mechanischen Stellung des Wählhebels in der Manuellgasse wäre für den Fahrer zudem eher verwirrend. Außerdem wäre ein mechanischer Antrieb für den Wählhebel notwendig, mit dem dieser parallel zu einer softwaregesteuerten Rückkehr in den Automatikmodus auch mechanisch in die Automatikgasse zurückgestellt werden müsste. Eine solche Einrichtung wäre mit zusätzlichen Herstellkosten verbunden, welches gerne vermieden wird.

Im Gegensatz dazu wird gemäß der zweiten o.g. Variante an der Getriebebetätigungseinrichtung nichts dauerhaft mechanisch verschoben oder eingerastet. So bleibt der Getriebewählhebel in der Automatikgasse, während durch das Betätigen der erwähnten Hoch- und Rückschalttasten beispielsweise am Lenkrad der Automatikmodus unterbrochen und das Getriebe gemäß den Betätigungssignalen des Fahrers geschaltet wird. Der Fahrer kann dabei lediglich an einer elektronischen Anzeige überprüfen, ob er sich derzeit im Automatikmodus oder im Manuellmodus befindet. Eine automatische Rückkehr in den Automatikmodus erfordert bei dieser Variante keine zusätzlichen mechanischen Maßnahmen, sie wird vielmehr durch die Betriebssoftware eines diesbezüglichen Getriebesteuerungsgerätes gesteuert.

Sofern sich der Fahrer eines derartig ausgestatteten Kraftfahrzeuges dazu entschlossen hat, das Fahrzeug für einen gewissen Zeitraum im Manuellmodus zu betreiben, stellt sich das technische Problem ein, aufgrund welcher Kriterien und wann dieser Manuellmodus zugunsten des Automatikmodus wieder beendet werden kann und soll.

Dabei ist eine autonome Rückkehr in den Automatikmodus durchaus wünschenswert, da ein Fahrzeug mit einem modernen Automatikgetriebe bei einem Betrieb im Automatikmodus im Vergleich zum Betrieb im Manuellmodus erkennbar weniger Kraftstoff verbraucht sowie insbesondere in fahrdynamisch kritischen Situationen, beispielsweise im Zusammenwirken mit anderen Fahrzeugsteuerungsgeräten, sehr viel sicherer gefahren werden kann.

Im übrigen stellt eine manuelle Rückstellung des Getriebewählhebels aus dem Manuellmodus in den Automatikmodus ein gewisses Ablenkpotenzial für den Fahrer dar, so dass bei einer autonomen Rückstellung vom Manuellmodus in den Automatikmodus die Fahreraufmerksamkeit für die aktuelle Verkehrssituation deutlich erhöht werden kann.

Ein solcher Wechsel vom Manuellmodus zum Automatikmodus soll daher bevorzugt derart ablaufen, dass der Fahrer dies nicht als störend empfindet. Hierzu sind bereits einige Steuerungsverfahren beziehungsweise zugehörige Standardkriterien bekannt geworden.

So wurde beispielsweise vorgeschlagen, dass der genannte Wechsel dann erfolgen soll, wenn der Fahrer durch Betätigen eines gesonderten Tasters dies manuell befehligt. Gemäß einer anderen Verfahrensweise wird der Wechsel in den Automatikmodus dann autonom vollzogen, wenn seit der Auswahl des Manuellmodus ein vorbestimmter Zeitraum abgelaufen ist. Außerdem wurde vorgeschlagen, dass dann in den Automatikmodus zurückgekehrt wird, wenn dem Getriebesteuerungsgerät bestimmte vordefinierte sicherheitskritische Fahrbetriebszustände signalisiert werden, beispielsweise wenn die Drehzahl des Antriebsmotors des Kraftfahrzeuges eine zu hohe oder zu niedrige Drehzahl aufweist oder etwa das Fahrpedal des Fahrzeugs in die Kick-Down-Stellung ausgelenkt wird.

Schließlich ist es aus der DE 197 36 406 A1 bekannt, dass dann von dem Manuellmodus in den Automatikmodus gewechselt wird, wenn innerhalb eines bestimmten Zeitraumes die manuell gewählte Getriebeübersetzung derjenigen Getriebeübersetzung entspricht, die auch das Getriebesteuerungsgerät für die gerade vorliegende Fahrbetriebssituation im Automatikmodus vorsehen würde.

Zur weiteren Verbesserung des Betriebs eines gattungsgemäßen Automatikgetriebes soll aufgabengemäß eine weitere Rückkehrstrategie für einen Wechsel vom Manuellmodus in den Automatikmodus vorgeschlagen werden, mit der nach manuell signalisierten Übersetzungsänderungsvorgängen schneller als bisher in den Automatikmodus zurückgekehrt werden kann.

Die Lösung dieser Aufgabe ergibt sich aus den Merkmalen des Hauptanspruchs. Vorteilhafte Weiterbildungen und Ausgestaltungen der Erfindung sind den Unteransprüchen entnehmbar.

Die Erfindung geht demnach aus von einem Verfahren zur Steuerung eines Automatikgetriebes, dessen Übersetzung in einem Automatikmodus in Abhängigkeit von der jeweiligen Fahrbetriebssituation selbsttätig oder in einem aktivierbaren Manuellmodus manuell eingestellt wird, und bei dem die Getriebesteuerungseinrichtung des Automatikgetriebes autonom von dem Manuellmodus auf den Automatikmodus zurückgestellt wird, wenn mindestens ein vorbestimmtes Rückführkriterium zutrifft.

Gemäß der Erfindung ist dabei vorgesehen, dass der Betrieb des Automatikgetriebes von dem Manuellmodus auf den Automatikmodus umgestellt wird, wenn nach manueller Einleitung eines Rückschaltvorgangs sowie durchgeführter Rückschaltung eine positive Fahrzeuglängsbeschleunigung abgeschlossen ist, und diese Fahrzeuglängsbeschleunigung länger als eine vorbestimmte Zeitspanne andauerte.

In Ausgestaltung dieses Steuerungsverfahrens ist vorgesehen, dass nur solche positiven Längsbeschleunigungswerte berücksichtigt werden, die einen vorbestimmten Längsbeschleunigungsschwellwert überschreiten.

Es werden mehrere gang- bzw. übersetzungsabhängige Längsbeschleunigungsschwellwerte genutzt. Dabei kann vorgesehen sein, dass die Längsbeschleunigungsschwellwerte um so größer sind, je kleiner der gewählte Getriebegang ist.

Zudem wird es als vorteilhaft beurteilt, wenn nur solche manuell ausgelösten Übersetzungsänderungsbefehle berücksichtigt werden, die technisch realisierbar bzw. plausibel sind. So wird der Wunsch hinsichtlich einer Getrieberückschaltung oder Getriebehochschaltung dann nicht berücksichtigt, wenn bereits der niedrigste bzw. der höchste Getriebegang eingelegt ist.

Gemäß einer anderen Variante der Erfindung ist vorgesehen, dass dann, wenn der Übersetzungsänderungsbefehl eine Hochschaltung des Getriebes verlangt und der positive Längsbeschleunigungswert den vorbestimmten Längsbeschleunigungsschwellwert nicht erreicht oder nicht überschritten hat, oder die Phase der positiven Längsbeschleunigung noch nicht abgeschlossen ist, andere Kriterien zur Entscheidung für eine Rückkehr von dem Manuellmodus zu dem Automatikmodus überprüft werden.

Derartige andere Kriterien für eine Rückkehr von dem Manuellmodus zu dem Automatikmodus können sein, dass der Wechsel dann erfolgt, wenn der Fahrer, beispielsweise durch Betätigen eines gesonderten Tasters, dies manuell befehligt, wenn seit der Auswahl des Manuellmodus ein vorbestimmter Zeitraum abgelaufen ist, wenn dem Getriebesteuerungsgerät bestimmte vordefinierte sicherheitskritische Fahrbetriebszustände signalisiert werden, oder wenn innerhalb eines bestimmten Zeitraumes die manuell gewählte Getriebeübersetzung derjenigen Getriebeübersetzung entspricht, die auch das Getriebesteuerungsgerät für die gerade vorliegende Fahrbetriebssituation im Automatikmodus vorsehen würde.

Außerdem kann vorgesehen sein, dass der Betrieb des Automatikgetriebes von dem Manuellmodus auf den Automatikmodus umgestellt wird, wenn nach dem Ende eines ausreichend langen positiven Beschleunigungsvorgangs ein vorbestimmter Zeitraum ohne erneute positive Längsbeschleunigung vergangen ist.

Ein konkretes Steuerungsverfahren gemäß den Merkmalen der Erfindung ist durch folgende Steuerungsschritte gekennzeichnet:
a) Überprüfen, ob eine manuelle Umschaltung von einem automatischen zu einem manuell befehligten Automatikgetriebebetrieb erfolgt ist.
b) Sofern Abfrage a) positiv beantwortet ist, durchführen einer Plausibilitätsüberprüfung des manuell signalisierten Übersetzungsänderungswunsches.
c) Sofern die Plausibilitätsüberprüfung gemäß Schritt b) positiv war, prüfen ob eine Getrieberückschaltung gewünscht wird.
d) Sofern eine Getrieberückschaltung gewünscht wird, prüfen, ob eine positive Fahrzeuglängsbeschleunigung vorliegt.
e) Sofern eine positive Fahrzeuglängsbeschleunigung vorliegt, prüfen, ob die Fahrzeuglängsbeschleunigung länger als einen vorbestimmten Zeitraum angedauert hat.
f) Sofern Abfrage e) positiv beantwortet wurde, umschalten der Getriebesteuerungseinrichtung vom Manuellmodus in den Automatikmodus.
g) Sofern eine der Abfragen c) bis e) negativ beantwortet wurde, überprüfen, ob wenigstens ein anderes Kriterium für eine Rückkehr von dem Manuellmodus zu dem Automatikmodus zutrifft.
h) Sofern ein anderes Umschaltkriterium gemäß Abfrage g) zutrifft, umschalten der Getriebesteuerungseinrichtung vom Manuellmodus in den Automatikmodus.

Zur Erläuterung der Erfindung ist der Beschreibung eine Zeichnung beigefügt. In dieser ist schematisch ein Ablaufdiagramm gezeigt, welches im Sinne eines Ausführungsbeispiels die erfindungsgemäße Rückkehrstrategie beispielhaft in programmtechnische Funktionsblöcke aufgliedert. Diese Rückkehrstrategie ist vorzugsweise in dem Getriebesteuerungsgerät als Steuerungsprogramm abgespeichert und arbeitet mit einer Vielzahl von anderen Getriebesteuerungsprogrammen zusammen. Die für die jeweilige Entscheidungsfindung notwendigen Informationen gewinnt das Getriebesteuerungsgerät in an sich bekannter Weise mit Hilfe von Sensoren oder aus Daten von anderen Fahrzeugcomputern.

Gemäß Block 1 des in Rede stehenden Getriebesteuerungsprogramms wird in einer Abfrageschleife überprüft, ob der Fahrzeugführer in einem mit einem gattungsgemäßen Automatikgetriebe ausgerüsteten Fahrzeug durch Betätigen der Getriebewähleinrichtung (Fahrereingriff) die Getriebesteuerungseinrichtung in den Manuellmodus geschaltet hat.

Sofern dies zutrifft, wird im Block 2 eine Plausibilitätsprüfung durchgeführt. Bei dieser Plausibilitätsprüfung wird der manuelle Eingriff des Fahrers in den bis dahin automatischen Getriebesteuerungsablauf beispielsweise darauf geprüft, ob dessen Übersetzungsänderungswunsch technisch überhaupt realisierbar ist. Diesbezüglich unplausible Übersetzungsänderungswünsche werden von dem Steuerungsprogramm ignoriert, so dass gemäß der Bearbeitungsschleife zum Eingang des Blocks 1 zurückverzweigt wird.

So wird beispielsweise der signalisierte Wunsch des Fahrers nach einer Getrieberückschaltung ("-"-Eingriff) nicht berücksichtigt, wenn aktuell bereits der kleinste Getriebegang eingelegt ist. Gleiches geschieht bei einem Fahrerwunsch hinsichtlich einer Hochschaltung, wenn das Automatikgetriebe aktuell bereits im höchsten Getriebegang betrieben wird.

Sofern im Block 3 ein plausibler Rückschaltbefehl festgestellt wurde, erfolgt die weitere Abarbeitung der erfindungsgemäßen Rückkehrstrategie gemäß der beigefügten Zeichnungsfigur, auf die nachfolgend eingegangen wird.

Wenn der Fahrer einen plausiblen Schaltbefehl abgegeben hat, dieser aber kein Rückschaltbefehl ist, so wird von Block 3 zum Block 10 verzweigt. Dort wird geprüft, ob der Befehl zur Übersetzungsänderung ein Hochschaltbefehl ("+"-Eingriff) ist. Sofern dies nicht zutrifft wird zum Eingang des Blocks 1 zurückverzweigt, so dass die bisher geschilderte Abfrageschleife erneut durchlaufen werden kann.

Für den Fall, dass eine Hochschaltung durch den Fahrer manuell befehligt wurde, wird der Block 10 über den Ja-Ausgang verlassen und eine diesbezügliche Übersetzungsänderung im Getriebe durchgeführt. Eine autonome Rückkehr zum Automatikbetriebsmodus des Getriebes erfolgt gegebenenfalls dann, wenn wenigstens eines der anderen oben genannten Rückkehrkriterien (Block 11) zutrifft. Dann wird der Block 11 über den Ja-Ausgang verlassen, um im Block 7 den Befehl zum Betriebsartwechsels zu veranlassen. Andernfalls wird zum Eingang von Block 1 zurückverzweigt.

Wenn ein manuell signalisierter plausibler Rückschaltbefehl im Block 3 festgestellt wurde, erfolgt im Getriebe eine diesbezügliche Übersetzungsänderung. Anschließend wird im Block 4 überprüft, ob eine positive Fahrzeuglängsbeschleunigung vorliegt.

Dabei kann vorgesehen sein, dass nur solche positiven Fahrzeuglängsbeschleunigungen berücksichtigt werden, die einen vorgegebenen Beschleunigungsschwellwert überschreiten. Die Fahrzeuglängsbeschleunigung kann in an sich bekannter Weise mittels geeigneter Sensoren gemessen oder durch mathematische Differenzierung der gemessenen Fahrzeuggeschwindigkeit bzw. mit Hilfe der gemessenen Getriebeausgangsdrehzahl oder Fahrzeugraddrehzahl berechnet werden. Eine Tiefpass-Filterung kann zur Glättung des Messsignals vorteilhaft durchgeführt werden.

Der genannte Schwellwert der Fahrzeuglängsbeschleunigung kann beispielsweise abhängig von dem Getriebeübersetzungsverhältnis bzw. vom gewählten Getriebegang sein, um die übersetzungsbezogen unterschiedlichen maximalen Beschleunigungsfähigkeiten des Fahrzeugs berücksichtigen zu können. Dies kann in der Weise erfolgen, dass der genannte Längsbeschleunigungsschwellwert um so größer ist, je niedriger der eingelegte Getriebegang ist. Die Beziehung zwischen dem eingestellten Übersetzungsverhältnis und dem Längsbeschleunigungsschwellwert kann demnach beispielsweise auch antiproportional gewählt sein. Bevorzugt liegen diese Längsbeschleunigungsschwellwerte im Bereich von mehr als 0 m/s² bis 1 m/s².

Sofern keine positive Fahrzeuglängsbeschleunigung festgestellt wird, also das Fahrzeug steht, mit gleichbleibender Geschwindigkeit fährt oder verzögert wird, erfolgt eine Verzweigung zum Block 9.

In diesem Block 9 wird geprüft, ob aus anderen Gründen, beispielsweise hinsichtlich der o.g. genannten bekannten Standardkriterien, eine Rückkehr zu dem Automatikmodus erfolgen soll. Sofern zumindest eines dieser Standardkriterien erfüllt ist, wird der Block 9 über den Ja-Ausgang verlassen und zum Block 7 verzweigt. Gemäß Block 7 wird dann der Wechsel von Manuellmodus in den Automatikmodus veranlasst.

Sofern sich bei der Überprüfung der bekannten Standardrückkehrkriterien im Block 9 herausstellt, dass keines dieser Kriterien erfüllt ist, wird von diesem Block 9 über dessen Nein-Ausgang zum Eingang des Blocks 4 zurückverzweigt, so dass in einer erneuten Bearbeitungsschleife im Block 4 überprüfbar ist, ob nun mittlerweile eine positive Fahrzeuglängsbeschleunigung vorliegt.

Sofern im Block 4 diese positive Fahrzeuglängsbeschleunigung festgestellt wurde, wird anschließend in Block 5 überprüft, ob diese positive Beschleunigungsphase beendet ist.

Da eine Längsbeschleunigung des Fahrzeugs nach einem Rückschaltvorgang beispielsweise mit einem Überhohlvorgang des Fahrzeugs in Verbindung steht, kann nach dessen Beendigung an sich von dem Manuellmodus in den Automatikmodus zurückgekehrt werden. Da die Fahrpraxis zeigt, dass nicht jeder begonnene Überholvorgang auch tatsächlich zuende geführt wird, ist es vorteilhaft, wenn nicht unmittelbar nach dem Ende der positiven Längsbeschleunigung zu dem Automatikmodus für den Übersetzungsänderungsbetrieb des Automatikgetriebes zurückgekehrt wird.

Die Erfindung sieht daher einen weiteren Verfahrensschritt gemäß Block 6 vor. In diesem wird nach dem Feststellen des Endes der Beschleunigungsphase geprüft, ob die positive Fahrzeuglängsbeschleunigung zumindest einen vorbestimmten Zeitraum gedauert hat.

Die Dauer eines solchen Beschleunigungsvorgangs kann durch einen Zeitzähler im Steuerungsgerät gemessen werden. Sofern der Beschleunigungszeitraum mit einer ausreichend hohen Fahrzeugslängsbeschleunigung größer ist als ein vorbestimmter, gegebenenfalls auch gangabhängiger Zeitraum, dann wird die Beschleunigungsdauer als lang genug bewertet. Ein typischer Wert für eine solche Mindest-Beschleunigungsdauer kann 4 Sekunden sein. Sofern die Längsbeschleunigungsphase länger als diese Mindest-Beschleunigungsdauer andauerte, wird nach dem Ende der Beschleunigungsphase selbsttätig in den Automatikmodus des Getriebes zurückkehrt (Block 7).

Zusätzlich kann vorgesehen sein, dass nach dem Ende einer ausreichend langen Längsbeschleunigungsphase eine bestimmte Zeitdauer gewartet wird, beispielsweise im Bereich von 60 bis 180 Sekunden, bevor von dem Manuellmodus in den Automatikmodus umgeschaltet wird. Dadurch wird erreicht, dass ein mit einem sich an den ersten Überhohlvorgang anschließenden zweiten Überhohlvorgang beschäftigter Fahrer nicht durch ein automatisch eingestelltes neues Getriebeübersetzungsverhältnis überrascht wird, selbst wenn dieses neue Getriebeübersetzungsverhältnis hinsichtlich des momentanen Kraftstoffverbrauchs möglicherweise günstiger wäre.

Wenn die positive Beschleunigungsphase nicht lange genug gedauert hat, wird ausgehend vom Block 6 über dessen Nein-Ausgang zum Eingang des Blocks 4 zurückverzweigt. Dadurch kann ein neuer Überhohlversuch durch Feststellen einer positiven Fahrzeuglängsbeschleunigung ermittelt sowie erneut dessen Dauer bestimmt werden (Block 4 bis Block 6).

Sofern der Zeitraum der positiven Beschleunigung gemäß der Überprüfung im Block 6 lang genug war, wird im Block 7 ein Steuerungsbefehl erzeugt, gemäß dem die Getriebesteuerung von dem Manuellmodus in den Automatikmodus zurückgestellt wird.

Das Abarbeiten der Verfahrensschritte des gerade beschriebenen Steuerungsverfahrens bietet zusätzlich zu den bekannten Standardkriterien für eine Rückkehr von einem Manuellmodus zu einem Automatikmodus eines Automatikgetriebes eine weitere Möglichkeit zum Betriebsartwechsel, wodurch sich dessen Betriebsverhalten erkennbar verbessert. So wechselt die Getriebesteuerung nach einem vorherigen manuellen Wechsel in den Manuellmodus nach einem Beschleunigungsvorgang genau dann in den Automatikmodus zurück, wenn der Fahrer dies auch erwartet. Also dann, wenn ein Überhohlvorgang erfolgreich abgeschlossen ist und in Kürze kein weiterer Überhohlvorgang zu erwarten ist.

Ein weiterer Vorteil ist, dass nach einem solchen Überhohlvorgang durch die autonome Rückkehr in den Automatikmodus die zur weiteren Erhöhung der Fahrzeuggeschwindigkeit anschließend notwendigen Hochschaltvorgänge deutlich früher als bei bekannten Verfahren erfolgen können.

Diese Erkenntnis ergibt sich auch aus Beobachtungen in der Fahrpraxis, gemäß denen ein Fahrer nach einem Umschalten des Getriebesteuerungsgerätes in den Manuellmodus und einem anschließenden Überhohlvorgang noch längere Zeit in diesem Manuellmodus verbleibt, bis diesem einfällt, dass der Autornatikmodus die beschriebenen Vorteile hinsichtlich des Kraftstoffverbrauchs, der Fahrsicherheit und der Bestimmung des fahrsituationsoptimalen Schaltzeitpunktes mit sich bringt.

Wie die vorstehenden Schilderungen verdeutlichen, ist das erfindungsgemäße Steuerungsverfahren bevorzugt an Getriebebetätigungseinrichtungen gemäß der in der Beschreibungseinleitung genannten zweiten Variante nutzbar, bei der das Umstellen des Getriebesteuerungsgerätes von dem Automatikmodus in den Manuellmodus durch das Betätigen von Tastern oder Schaltern erfolgt und der Getriebewählhebel auch während der manuellen Betriebsweise in der Automatikgasse verbleibt.

Unabhängig davon kann das Steuerungsverfahren gemäß der Erfindung aber auch bei einer Getriebesteuerungseinrichtung gemäß der ersten Variante genutzt werden, bei der der Getriebewählhebel mit der Hand in eine Manuellgasse verschwenkt wird.

Zudem ist die Erfindung auch in einem Kraftfahrzeug mit einem gattungsgemäßen Automatikgetriebe nutzbar, bei dem die Getriebewähleinrichtung sowohl eine Automatikgasse als auch eine Manuellgasse für einen Getriebewählhebel aufweist, und zudem Schalter, Taster o.ä. beispielsweise an den Lenkradspeichen angeordnet sind, mit denen die Übersetzungsänderungssteuerung manuell befehligt werden kann.

Dabei kann vorgesehen sein, dass der Wählhebel nach seinem Einlegen in die Manuellgasse dort solange verbleibt, bis der Fahrer diesen mechanisch wieder in die Automatikgasse zurückführt. Sofern der Fahrer die o.g. Schalter, Taster o.ä. zur Übersetzungssteuerung nutzt, so kann die Rückkehr in den Automatikmodus entsprechend den im erfindungsgemäßen Steuerungsverfahren definierten Regeln erfolgen. Ein erneutes Betätigen der Schalter, Taster o.ä. führt bei in der Manuellgasse eingelegtem Wählhebel erneut zur manuell signalisierten Übersetzungsänderungssteuerung.

Mit den gleichen Vorteilen wird aber auch ein Automatikgetriebe bzw. ein Kraftfahrzeug erfindungsgemäß betrieben, dessen Getriebebetätigungsvorrichtung lediglich über eine Automatikgasse für den Getriebewählhebel verfügt, und bei dem für eine manuelle Übersetzungsänderungssteuerung die genannten Schalter, Taster o.ä. beispielsweise an dem Lenkrad genutzt werden.

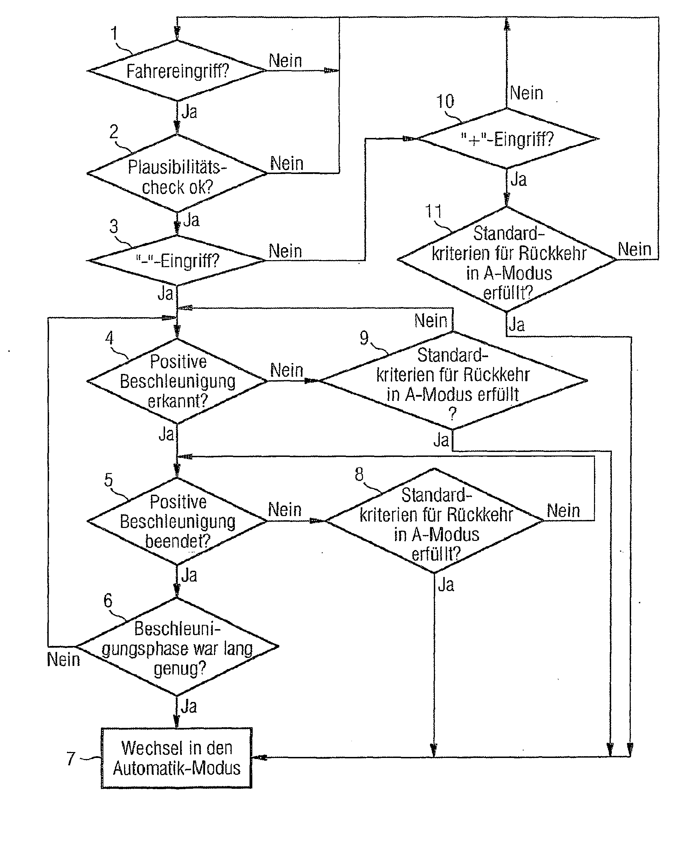

## Patentansprüche

1. Verfahren zur Steuerung eines Automatikgetriebes, dessen Übersetzung in einem Automatikmodus in Abhängigkeit von der jeweiligen Fahrbetriebssituation selbsttätig oder in einem aktivierbaren Manuellmodus manuell eingestellt wird, wobei die Getriebesteuerungseinrichtung des Automatikgetriebes autonom von dem Manuellmodus auf den Automatikmodus umgestellt wird, wenn mindestens ein vorbestimmtes Rückführkriterium zutrifft, wobei
der Betrieb des Automatikgetriebes von dem Manuellmodus auf den Automatikmodus umgestellt wird, wenn nach manueller Einleitung eines Rückschaltvorgangs sowie durchgeführter Rückschaltung eine positive Fahrzeuglängsbeschleunigung abgeschlossen ist, und diese Fahrzeuglängsbeschleunigung länger als eine vorbestimmte Zeitspanne angedauert hat, **dadurch gekennzeichnet,**
**dass** nur positive Fahrzeuglängsbeschleunigungswerte berücksichtigt werden, die einen vorbestimmten Längsbeschleunigungsschwellwert überschreiten, wobei der jeweilige Längsbeschleunigungsschwellwert gang- bzw. übersetzungsabhängig bestimmt ist.

2. Verfahren nach Anspruch 1, **dadurch gekennzeichnet, dass** die Längsbeschleunigungsschwellwerte umso größer sind, je kleiner der gewählte Getriebegang ist.

3. Verfahren nach wenigstens einem der vorherigen Ansprüche, **dadurch gekennzeichnet, dass** nur solche manuell ausgelösten Übersetzungsänderungsbefehle berücksichtigt werden, die technisch realisierbar bzw. plausibel sind.

4. Verfahren nach wenigstens einem der vorherigen Ansprüche, **dadurch gekennzeichnet, dass** dann, wenn der Übersetzungsänderungsbefehl eine Hochschaltung des Getriebes verlangt und der positive Längsbeschleunigungswert den vorbestimmten Längsbeschleunigungswert nicht erreicht oder nicht überschreitet, oder die Phase der positiven Längsbeschleunigung noch nicht abgeschlossen ist, andere Kriterien für eine Rückkehr von dem Manuellmodus zu dem Automatikmodus überprüft werden.

5. Verfahren nach wenigstens einem der vorherigen Ansprüche, **dadurch gekennzeichnet, dass** die anderen Kriterien für eine Rückkehr von dem Manuellmodus zu dem Automatikmodus beinhalten, dass der Wechsel dann erfolgt, wenn der Fahrer dies manuell befehligt, oder wenn seit der Auswahl des Manuellmodus ein vorbestimmter Zeitraum abgelaufen ist oder wenn dem Getriebesteuerungsgerät bestimmte vordefinierte sicherheitskritische Fahrbetriebszustände signalisiert werden oder wenn innerhalb eines bestimmten Zeitraumes die manuell gewählte Getriebeübersetzung derjenigen Getriebeübersetzung entspricht, die auch das Getriebesteuerungsgerät für die gerade vorliegende Fahrbetriebssituation im Automatikmodus vorsehen würde.

6. Verfahren nach wenigstens einem der vorherigen Ansprüche, **dadurch gekennzeichnet, dass** der Betrieb des Automatikgetriebes von dem Manuellmodus auf den Automatikmodus umgestellt wird, wenn nach dem Ende eines ausreichend langen positiven Beschleunigungsvorgangs ein vorbestimmter Zeitraum ohne erneute positive Längsbeschleunigung vergangen ist.

7. Verfahren nach wenigstens einem der vorherigen Ansprüche, **gekennzeichnet durch** folgende Steuerungsschritte
a) Überprüfen, ob eine manuelle Umschaltung von einem automatischen zu einem manuell befehligten Automatikgetriebebetrieb erfolgt ist.
b) Sofern Abfrage a) positiv beantwortet ist, durchführen einer Plausibilitätsüberprüfung des manuell signalisierten Übersetzungsänderungswunsches.
c) Sofern die Plausibilitätsüberprüfung gemäß Schritt b) positiv war, prüfen ob eine Getrieberückschaltung gewünscht wird.
d) Sofern eine Getrieberückschaltung gewünscht wird, prüfen, ob eine positive Fahrzeuglängsbeschleunigung vorliegt.
e) Sofern eine positive Fahrzeuglängsbeschleunigung vorliegt, prüfen, ob die Fahrzeuglängsbeschleunigung länger als einen vorbestimmten Zeitraum angedauert und einen vorbestimmten, gang- bzw. übersetzungsabhängigen Längsbeschleunigungsschwellwert überschritten hat.
f) Sofern Abfrage e) positiv beantwortet wurde, umschalten der Getriebesteuerungseinrichtung vom Manuellmodus in den Automatikmodus.
g) Sofern eine der Abfragen c) bis e) negativ beantwortet wurden, überprüfen, ob wenigstens ein anderes Kriterium für eine Rückkehr von dem Manuellmodus zu dem Automatikmodus zutrifft.
h) Sofern die Abfrage g) erfüllt ist, umschalten der Getriebesteuerungseinrichtung vom Manuellmodus in den Automatikmodus.

## Claims

1. Method for controlling an automatic transmission whose transmission ratio is set automatically in an automatic mode as a function of the respective driving mode situation or manually in a manual mode which can be activated, wherein the transmission control device of the automatic transmission is changed over autonomously from the manual mode to the automatic mode if at least one predetermined return criterion applies, wherein
the operation of the automatic transmission is changed over from the manual mode to the automatic mode if a positive vehicle longitudinal acceleration is terminated after manual introduction of a shift-down operation and after a shift-down operation has been carried out and this vehicle longitudinal acceleration has lasted for longer than a predetermined time period,
**characterized**
**in that** only positive vehicle longitudinal acceleration values which exceed a predetermined longitudinal acceleration threshold value are taken into account, wherein the respective longitudinal acceleration threshold value is determined as a function of the gear or transmission ratio.

2. Method according to Claim 1, **characterized in that** the longitudinal acceleration threshold values are larger the smaller the selected gear speed.

3. Method according to at least one of the preceding claims, **characterized in that** only those manually triggered transmission ratio change commands which can be technically implemented or are technically plausible are taken into account.

4. Method according to at least one of the preceding claims, **characterized in that** when the transmission ratio change command requires a shift up of the transmission and the positive longitudinal acceleration value does not reach or does not exceed the predetermined longitudinal acceleration value, or the phase of the positive longitudinal acceleration is not yet terminated, other criteria for a return from the manual mode to the automatic mode are checked.

5. Method according to at least one of the preceding claims, **characterized in that** the other criteria for a return from the manual mode to the automatic mode include that the change takes place when the driver commands this manually or when a predetermined time period has expired since the selection of the manual mode or if specific predefined safety-critical driving mode states are signalled to the transmission control device or if within a specific time period the manually selected transmission ratio corresponds to that transmission ratio which the transmission control device would also provide in the automatic mode for the driving mode situation which is currently present.

6. Method according to at least one of the previous claims, **characterized in that** the operation of the automatic transmission is changed over from the manual mode to the automatic mode if after the end of a sufficiently long positive acceleration process a predetermined time period without renewed positive longitudinal acceleration has passed.

7. Method according to at least one of the preceding claims, **characterized by** the following control steps
a) checking whether manual switching over from an automatic to a manually commanded automatic transmission mode has taken place,
b) if interrogation a) has received a positive response, carrying out a plausibility check of the manually signalled transmission ratio change request,
c) if the plausibility check according to step b) was positive, checking whether a transmission shift down is desired,
d) if a transmission shift down is desired, checking whether a positive vehicle longitudinal acceleration is present,
e) if a positive vehicle longitudinal acceleration is present, checking whether the vehicle longitudinal acceleration has lasted for longer than a predetermined time period and has exceeded a predetermined longitudinal acceleration threshold value which is dependent on the gear or transmission ratio,
f) if interrogation e) has received a positive response, switching over the transmission control device from the manual mode to the automatic mode,
g) if one of the interrogations c) to e) has received a negative response, checking whether at least one other criterion for a return from the manual mode to the automatic mode applies, and
h) if the interrogation g) is satisfied, switching over the transmission control device from the manual mode to the automatic mode.

## Revendications

1. Procédé permettant de commander une boîte de vitesses automatique, dont le changement de rapport de vitesse dans un mode automatique est réglé automatiquement en fonction de chaque situation de conduite ou manuellement dans un mode manuel activable, le dispositif de commande de la boîte de vitesses automatique étant commuté de manière autonome du mode manuel au mode automatique lorsqu'au moins un critère prédéterminé de retour se présente, le fonctionnement de la boîte de vitesses automatique étant commuté du mode manuel au mode automatique lorsque, à la suite d'une introduction manuelle d'un processus de rétrogradation de vitesse et d'une rétrogradation de vitesse effectuée, une accélération longitudinale positive du véhicule est terminée, et que cette accélération longitudinale positive du véhicule dure plus longtemps qu'un intervalle de temps prédéterminé, **caractérisé en ce que** seules sont prises en compte les valeurs d'accélération longitudinale positive qui sont supérieures à une valeur seuil d'une accélération longitudinale prédéterminée, ladite valeur seuil respective d'une accélération longitudinale étant déterminée en fonction du rapport de vitesse ou de transmission.

2. Procédé selon la revendication 1, **caractérisé en ce que** les valeurs seuils de l'accélération longitudinale sont d'autant plus élevées que le rapport de vitesse choisi est petit.

3. Procédé selon au moins l'une quelconque des revendications précédentes, **caractérisé en ce que** seules sont prises en compte les instructions de changement de rapport de vitesse déclenchées manuellement qui sont techniquement réalisables ou plausibles.

4. Procédé selon au moins l'une quelconque des revendications précédentes, **caractérisé en ce que** d'autres critères pour un retour du mode manuel au mode automatique sont examinés lorsque l'instruction de changement du rapport de vitesse demande le passage à un rapport de vitesse plus élevé de la boîte de vitesses et lorsque la valeur de l'accélération longitudinale positive n'atteint pas la valeur d'accélération longitudinale prédéterminée ou n'est pas supérieure à celle-ci ou lorsque la phase de l'accélération longitudinale positive n'est pas encore terminée.

5. Procédé selon au moins l'une quelconque des revendications précédentes, **caractérisé en ce que** les autres critères pour un retour du mode manuel au mode automatique contiennent le fait que le changement se produit lorsque le conducteur l'ordonne manuellement, ou lorsqu'un intervalle de temps prédéterminé s'est écoulé depuis la sélection du mode manuel ou lorsque certaines situations de conduite prédéterminées, critiques pour la sécurité, sont signalées au dispositif de commande de la boîte de vitesses ou lorsque, dans un intervalle de temps déterminé, le rapport de vitesse sélectionné manuellement correspond au rapport de vitesse que le dispositif de commande de la boîte de vitesses choisirait également en mode automatique pour la situation de conduite prévalant à ce moment-là.

6. Procédé selon au moins l'une quelconque des revendications précédentes, **caractérisé en ce que** le fonctionnement de la boîte de vitesses automatique est commuté du mode manuel au mode automatique lorsque, à la fin d'un processus d'accélération positive suffisamment long, un intervalle de temps prédéterminé s'est écoulé sans nouvelle accélération longitudinale positive.

7. Procédé selon au moins l'une quelconque des revendications précédentes, **caractérisé par** les étapes de commande suivantes :
a) vérifier si le fonctionnement de la boîte de vitesses automatique a été commuté manuellement d'un mode automatique à un mode manuel ;
b) en présence d'une réponse positive à la question a), effectuer un contrôle de plausibilité de la demande de changement du rapport de vitesse signalée manuellement ;
c) si le contrôle de plausibilité selon l'étape b) était positif, vérifier si une rétrogradation de vitesse est souhaitée ;
d) si une rétrogradation de vitesse est souhaitée, vérifier si on est en présence d'une accélération longitudinale positive du véhicule ;
e) en présence d'une accélération longitudinale positive du véhicule, vérifier si l'accélération longitudinale positive du véhicule dure plus longtemps qu'un intervalle de temps prédéterminé et si une valeur seuil d'accélération longitudinale fonction du rapport de vitesse ou de transmission a été dépassée ;
f) en présence d'une réponse positive à la question e), commuter le dispositif de commande de la boîte de vitesses du mode manuel au mode automatique ;
g) en présence d'une réponse négative aux questions c) à e), vérifier s'il se présente au moins un autre critère pour un retour du mode manuel dans le mode automatique ;
h) en présence d'une réponse positive à la question g), commuter le dispositif de commande de la boîte de vitesses du mode manuel dans le mode automatique.
